(19) Europäisches Patentamt
European Patent Office
Office européen des brevets

(11) **EP 4 722 399 A1**

(12) **EUROPEAN PATENT APPLICATION**
published in accordance with Art. 153(4) EPC

(43) Date of publication:
**08.04.2026 Bulletin 2026/15**

(21) Application number: **24815489.0**

(22) Date of filing: **28.05.2024**

(51) International Patent Classification (IPC):
*C22C 1/04* (2023.01)        *B22F 1/00* (2022.01)
*B22F 3/14* (2006.01)        *B22F 3/24* (2006.01)
*B22F 10/50* (2021.01)       *C22C 1/05* (2023.01)
*C22C 14/00* (2006.01)       *C22C 30/00* (2006.01)
*C22F 1/00* (2006.01)        *C22F 1/18* (2006.01)

(52) Cooperative Patent Classification (CPC):
Y02P 10/25

(86) International application number:
**PCT/JP2024/019589**

(87) International publication number:
**WO 2024/248007 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 JP 2023087738**

(71) Applicants:
• **KIGUCHI TECHNICS INC.**
  **Yasugi-shi, Shimane 692-0057 (JP)**

• **National University Corporation
  Shimane University
  Matsue-shi, Shimane 690-8504 (JP)**

(72) Inventors:
• **Toyama, Fumio**
  **Yasugi-shi, Shimane 692-0057 (JP)**
• **Sato, Koji**
  **Yasugi-shi, Shimane 692-0057 (JP)**
• **Wakabayashi, Hideki**
  **Matsue-shi, Shimane 690-8504 (JP)**

(74) Representative: **Hoffmann Eitle
  Patent- und Rechtsanwälte PartmbB
  Arabellastraße 30
  81925 München (DE)**

(54) **METHOD FOR PRODUCING TIAL-BASED ALLOY AND TIAL-BASED ALLOY**

(57)    Provided is a method of producing a TiAl-based alloy, including sintering mixed raw material powder containing Ti powder and Al powder as main raw materials, wherein such an alloy that an abundance ratio of Al in an arbitrary section measuring 0.5 mm by 0.5 mm inside a sintered body falls within a range of an Al fraction in the mixed raw material powder plus and minus 3 at% is obtained by increasing a temperature of the mixed raw material powder at a rate of temperature increase of 10°C or less per minute, or by arranging an isothermal holding time while increasing the temperature in a stepwise manner, in a predetermined temperature region between 550°C and 750°C.

Fig. 3

| position / sample | A | B | C | D |
|---|---|---|---|---|
| No.1 NO HOLDING IN MIDDLE OF HEATING (COMPARATIVE EXAMPLE 1) | Al:43.1% | Al:44.7% | Al:47.2% | Al:45.4% |
| No.2 HOLDING AT 600°C FOR 1 h (EXAMPLE) | Al:44.3% | Al:44.6% | Al:44.2% | Al:44.8% |
| No.3 HOLDING AT 800°C FOR 1 h (COMPARATIVE EXAMPLE 2) | Al:43.7% | Al:46.9% | Al:48.1% | Al:46.0% |

EP 4 722 399 A1

## Description

Technical Field

The present invention relates to a technology for production of a TiAl-based alloy that is a lightweight and heat-resistant alloy, in particular, a technology for production of a TiAl-based alloy having practical quality without use of prealloy powder as a raw material.

Background Art

A titanium-aluminum-based alloy (TiAl-based alloy) has been expected to find applications in an aircraft, an automobile, and energy industrial equipment because of its high specific strength and heat resistance. In, for example, an aircraft engine, the TiAl-based alloy has already been adopted as a last resort for lower fuel consumption in part of a low-pressure turbine blade.

A 4822 alloy (Ti-48Al-2Cr-2Nb at%) developed by General Electric Company of USA in the 1990s is best known as a current practical alloy. The 4822 alloy is called a second-generation alloy (cast alloy).

In the 2000s onward, attention has been paid to forgeability and high-temperature characteristics, and hence a third-generation alloy alloyed by increasing an element for stabilizing a $\beta$-Ti phase such as Nb has been developed. A famous third-generation alloy is a TNM alloy (Ti-43.5A1-4Nb-1Mo-0.1B at%).

Methods of producing TiAl-based alloys can be roughly classified into the following two processes: a solution process and a powder process (elemental powder sintering process).

In the solution process, a typical crucible cannot be used because the TiAl-based alloy has a high melting point and has high reactivity at the time of its melting. Thus, a water-cooled copper crucible needs to be used in a vacuum or an inert gas. Accordingly, the solution process has become a special method, and hence has involved a problem in that the alloy is liable to be costly.

In addition, the TiAl-based alloy is problematic in terms of castability, and hence at the time of its commercialization or productization, there has been a problem in that the alloy is costly in terms of yield and quality assurance; for example, additional HIP treatment is required as a measure against a casting defect.

There have been many research reports on the powder process.

Most of the reports are each the following method: first, a prealloy is produced by the solution process; the prealloy is atomized or powderized by any one of various methods; and the resultant is turned into a bulk shape by sintering. Although the method can stabilize the quality of an alloy to be obtained, the method does not differ from the solution process in that a long lead time is required, and hence the alloy is costly.

Meanwhile, a production method in which no prealloy powder is used and elemental powder is used as a raw material has been studied since olden times. However, when the elemental powder is used as a raw material, a TiAl-based alloy having practical quality is not obtained. This is because such problems as described below are present:

(1) problems of melt leakage from a sintering die and macrosegregation caused by fluidization at the time of the melting of Al in the middle of its heating in a sintering cycle;
(2) a problem in that an Al-rich phase is liable to remain as a metastable phase on the surface of a Ti grain at the time of the permeation of Al into the surroundings of Ti powder grains (the problem derives from the fact that the standard formation energy of a compound having a higher Al ratio, such as $TiAl_3$ or $Ti_2Al_5$, tends to be lower than that of TiAl);
(3) a problem in that the amount of oxygen O that inevitably enters the elemental powder increases along with the pulverization of the powder to adversely affect the mechanical characteristics of a product; and
(4) a problem in that a void-like defect derived from insufficient pressurization in a high-temperature region or a raw material grain size is liable to occur.

That is, there are still many problems to be solved for obtaining a TiAl-based alloy having practical quality through use of raw material powder without use of any prealloy powder.

In addition, in recent years, a forming technology based on a powder additive manufacturing device in which a part having a complicated shape is three-dimensionally laminated has started to develop. However, when a part based on a TiAl-based alloy is formed, prealloy powder is generally used, and hence as described above, there is a problem in that high cost is essentially inevitable.

Citation List

Patent Literature

[PTL 1] JP 2019-051005
[PTL 2] JP 2019-211349
[PTL 3] JP 2022-038867

Non Patent Literature

[NPL 1] Musi, M., Clemens, H. et al.; Microstructure, Plasticity, and Ductility of a TNM+ Alloy Densified by Spark Plasma Sintering. Metals 2022, 12, 1915, 1-22.
[NPL 2] Behrens, B., et al.; Influence of Dwell Time and Pressure on SPS Process with Titanium Aluminides. Metals 2022, 12, 83, 1-14

[NPL 3] Jeje, S. O. et al.; Spark plasma sintering of Ti-48Al intermetallic using elemental powder. International Journal of Advanced Manufacturing Technology (2019) 103: 3025-3032

[NPL 4] Wenbin, F. et al.; Microstructure and properties of a TiAl alloy prepared by mechanical milling and subsequent reactive sintering. Materials Science and Engineering: A (2005) 403, Issues 1-2, 186-190

[NPL 5] Voisin T., Monchoux JP., Couret A. (2019). Near-Net Shaping of Titanium-Aluminum Jet Engine Turbine Blades by SPS. In: Cavaliere P. (eds) Spark Plasma Sintering of Materials. Springer, Cham.

Summary of Invention

Technical Problem

The present invention has been made in view of the foregoing, and an object of the present invention is to provide a technology for the production of a TiAl-based alloy having practical quality, that is, a TiAl-based alloy, which is high in room-temperature ductility and high-temperature strength as a result of the refinement of its structure by the suppression of segregation, at low cost without use of any prealloy powder as a raw material.

Another object of the present invention is to provide a technology for the production of a TiAl-based alloy product having a net shape or a near net shape through use of additive manufacturing.

Solution to Problem

A method of producing a TiAl-based alloy according to claim 1 is a method of producing a TiAl-based alloy, including subjecting mixed raw material powder containing Ti powder and Al powder as main raw materials to vacuum sintering, wherein such an alloy that an abundance ratio of Al in an arbitrary section measuring 0.5 mm by 0.5 mm inside a sintered body falls within a range of an Al fraction in the mixed raw material powder plus and minus 3 at% is obtained by increasing a temperature of the mixed raw material at a rate of temperature increase of 10°C or less per minute, or by arranging an isothermal holding time while increasing the temperature in a stepwise manner, in a predetermined temperature region between 550°C and 750°C.

According to the invention according to claim 1, there can be obtained a TiAl-based alloy in which so-called macrosegregation is absent or is reduced to the level at which no problems occur in practical use.

That is, a TiAl-based alloy that has high ductility at room temperature and has high strength at high temperature can be produced as a TiAl-based alloy.

A problem to be solved first in a powder process is a problem of macrosegregation caused by fluidization at the time of the melting of Al in the middle of its heating.

The inventors of the present invention have made extensive investigations, and have found that the macrosegregation can be eliminated as follows: in a predetermined temperature region between 550°C and 750°C in the middle of an increase in temperature of mixed raw material at the time of its sintering, the temperature is increased at a rate of temperature increase of 10°C or less per minute, or an isothermal holding time is arranged while the temperature is increased in a stepwise manner. Thus, the inventors have arrived at the present invention.

A reaction with Ti that occurs simultaneously with the melting of Al is completed in a relatively short time period until the production of $TiAl_3$, and the produced $TiAl_3$ is strong and is stable even at high temperature. Accordingly, when Al serving as raw material powder is melted over a certain time period instead of being melted in one stroke, each Ti grain is brought into contact with the molten liquid phase of an Al grain to form a fine and strong $TiAl_3$ network. That is, moderate Al melting hardly causes the precipitation or flow of Ti powder, and hence can complete the production reaction of $TiAl_3$.

Even when a large-size sintered body is produced, the adoption of this approach provides such an alloy that the abundance ratio of Al in an arbitrary section measuring 0.5 mm by 0.5 mm inside the sintered body falls within the range of the Al fraction in the mixed raw material powder plus and minus 3 at%.

The term "macrosegregation" as used herein refers to compositional variation having such a size as to be observable with a naked eye in an etched surface.

To quantitatively evaluate the macrosegregation, a surface of interest needs to be set as follows: the surface is large to the extent that the composition variation along with a difference in phase between crystal grain structures is hardly picked up; and the surface is small to the extent that averaging does not make it impossible to identify the segregation. A valid area for the foregoing may be an area, which is equal to or more than an area that is about 15 times as large as an approximate crystal grain diameter ($\approx$0.05 mm square) based on a microstructure, that is, about 0.15 mm square, and which is equal to or less than an area in which the segregation is hardly averaged ($\approx$about 3 mm square). In the present application, a section measuring 0.5 mm by 0.5 mm is adopted. A section measuring 0.3 mm by 0.3 mm, and a section measuring 0.15 mm by 0.15 mm may each be appropriately adopted. A section measuring 1 mm by 1 mm may be adopted in accordance with the aspect of specifications.

A method of measuring the macrosegregation may be, for example, area analysis by energy dispersive X-ray fluorescence spectroscopy (EDX) or electron probe microanalysis (EPMA).

The phrase "inside the sintered body" means that its surface layer is not included. This is because the surface layer may be affected by a die or the like.

The range of the tolerance of the macro segregation in the TiAl-based alloy plus and minus 3 at% is based on FIG. 16 (Non Patent Literature 5) serving as a state diagram of Ti-Al. As is apparent from the diagram, the phase of the alloy is complicated, and as the Al fraction thereof varies (macroscopic segregation occurs), it becomes harder to obtain a target crystal phase. In view of a 48 at% Al line or the like, the acceptable range of a shift from the Al fraction is at most $\pm 3$ at%, and is preferably $\pm 2$ at%, more preferably $\pm 1$ at%. The term "Al fraction in the mixed raw material powder" may be rephrased as, for example, "Al fraction in target alloy composition," "total Al fraction in raw material powder to be blended," or "Al fraction serving as a target value."

The Ti powder and the Al powder are each a so-called matrix, and the matrix does not inhibit the addition of any other raw material powder to the mixed raw material powder. Each of the foregoing kinds is raw material powder, and main kinds of powder out of the kinds are the Ti powder and the Al powder. In the present application, powder obtained by mixing such kinds of raw material powder is the mixed raw material powder, and the term "raw material powder" basically refers to the powder of a single pure metal or the powder of a compound having single composition (i.e., the raw material powder is not the mixture of a plurality of kinds of pure metal powder or metal compounds).

Microsegregation may be reduced by performing diffusion treatment in which the mixed raw material is held at a temperature of 1,200°C or more for a proper time period simultaneously with the sintering or separately thereafter.

A method of producing a TiAl-based alloy according to claim 2 is the method of producing a TiAl-based alloy according to claim 1, wherein the method includes a step of subjecting the mixed raw material powder to heat sintering at 1,000°C or more and a pressure of more than 10 MPa, to thereby provide a TiAl-based alloy in which a sectional area ratio of a porosity is 0.1% or less.

From a practical viewpoint, there may be given an example in which the temperature range is preferably from 1,200°C to 1,400°C, and the pressure is preferably from 50 MPa to 200 MPa.

The reduction of the porosity depends on the temperature, the pressure, and a holding time. Accordingly, for example, when the sintering is performed at 1,000°C, the mixed raw material is held at a higher pressure, and when the mixed raw material is pressurized at 10 MPa, the sintering is performed so that a higher temperature in a temperature range in which the sintering can be performed and a longer holding time are secured.

According to SPS, a pressure of 50 MPa can be applied to the mixed raw material powder, and according to HIP, a pressure of from about 100 MPa to about 200 MPa can be applied thereto, though an applicable pressure varies depending on a method for the heat sintering. When powder having an appropriate grain size range is used as a raw material, and is sintered at a pressure of 100 MPa or more, substantially no porosity is observed.

A method of producing a TiAl-based alloy according to claim 3 is the method of producing a TiAl-based alloy according to claim 1, wherein raw material powder in which both of a maximum value and an average of particle diameters of Al are smaller than those of Ti is used.

According to the invention according to claim 3, the segregation can be more effectively suppressed.

Results obtained by grain size distribution measurement may be used in a particle diameter evaluation.

Even when a rate of temperature increase in the range of from 550°C to 750°C is slowed down to a certain value or less, the melting of Al grains occurs in one stroke. At this time, to make it difficult for a Ti grain to freely fall in an Al liquid bath, that is, to make it difficult for segregation to occur, the particle diameters of Al only need to be smaller than the particle diameters of Ti on average. This is because of the following reason: in the case of an aggregate of Al grains each having a smaller particle diameter, the number of their contact points with the Ti grains increases, and hence the melting of each of the Al grains does not occur simultaneously with that of any other Al grain, and Al reacts with Ti at the respective contact points to sequentially form $TiAl_3$ networks; thus, the Ti particles are prevented from being encapsulated in a molten Al pool in one stroke. That is, even the segregation of a microscopic region can be suppressed to the minimum.

The average of the particle diameters of each of all kinds of raw material powder, such as Cr and Nb, in addition to Ti and Al is preferably set within the range of from 1 $\mu$m or more to less than 100 $\mu$m. In addition, an optimum particle diameter range may be determined for each element.

As described above, the method according to any one of claims 1 to 3 enables the production of a TiAl-based alloy that is extremely suppressed in each of sintering defects, such as macrosegregation, a porosity, and microsegregation, which have heretofore been difficult to suppress by a powder process.

A sintering method may be typically, for example, a spark plasma sintering (SPS) method, a hot isostatic pressing (HIP) method, or a hot pressing method.

A method of producing a TiAl-based alloy according to claim 4 is the method of producing a TiAl-based alloy according to claim 1, wherein the method includes a step of, after increasing the temperature at a rate of temperature increase of 10°C or less per minute, or after arranging the isothermal holding time while increasing the temperature in a stepwise manner, in the predetermined temperature region between 550°C and 750°C, sintering the resultant at 1,000°C or more and a pressure of more than 10 MPa, followed by cooling of the sintered product to 900°C at a cooling rate of 3°C/min or more.

The pressure sintering and temperature decrease step is applicable to a method according to claim 5 or 6 to be described later.

In the cooling process described in claim 4, the management of the cooling rate is important because the management may affect whether or not the quality characteristic of a product is satisfactory. Even in a study made by the inventors of the present application, the following phenomenon has been encountered: the mechanical characteristics of the product vary owing to a difference in cooling rate between sample sizes. Particularly at the time of the production of a large ingot, concern is raised about an adverse effect caused by the slowness of the cooling rate due to its volume effect. In view of the foregoing, the cooling rate is set to 3°C/min or more until the temperature of the sintered product reduces to 900°C irrespective of the size thereof.

A method of producing a TiAl-based alloy according to claim 5 is a method of producing a TiAl-based alloy, including forming mixed raw material powder containing Ti powder and Al powder as main raw materials with a powder additive manufacturing device in a non-oxidizing atmosphere, wherein beam scanning is performed so that any site of each layer is heated at 660°C or more for 0.1 second or more, to thereby form laminated temporary sintered bodies, and wherein the laminated temporary sintered bodies are subjected to main sintering at 1,000°C or more and a pressure of more than 10 MPa with a HIP device to provide a final sintered body.

A method of producing a TiAl-based alloy according to claim 6 is the method of producing a TiAl-based alloy according to claim 5, wherein the main sintering is performed by: accommodating ceramic powder and the temporary sintered bodies in a metal capsule; deaerating and sealing the capsule; and then increasing a temperature of, and decompressing, an entirety of the capsule with the HIP device in an inert gas.

The inventors of the present application have further challenged the following object: to obtain an alloy body having a net shape or a near net shape, which has not heretofore been reported in a powder process, through additive manufacturing. As a result of extensive investigations, the inventors have made the inventions according to claims 5 and 6.

First, as a first stage, the mixed raw material powder containing the Ti powder and the Al powder as main raw materials is subjected to additive manufacturing with the powder additive manufacturing device in the non-oxidizing atmosphere under the conditions described in claim 5. What is obtained in the first stage is an additively manufactured body, which is an incomplete sintered body of the above-mentioned kinds of raw material powder finely joined to each other so as to form $TiAl_3$ as a main body.

As a second stage, the additively manufactured body is subjected to main sintering with the HIP device. At that time, the temperature of the additively manufactured body may be directly increased under pressure in an oxygen-free gas, such as an argon gas or a nitrogen gas. The following method may be given as a method having a higher general-purpose property. Ceramic powder having an average particle diameter of 500 $\mu$m or less is loaded into the metal capsule, and the additively manufactured body is embedded in the powder, followed by the sealing of the capsule in a vacuum. After that, while the entirety of the capsule is pressurized to 10 MPa or more in the inert gas, the capsule is heated to 1,000°C or more. Thus, the final sintered body is obtained.

In general, in the HIP treatment of the additively manufactured body, the object to be treated is typically decompressed in a gas, such as an argon gas or a nitrogen gas, in a direct manner. However, when a penetrating porosity is present in the object to be treated, the decompression does not become sufficient. In an additively manufactured body having a high energy density at the time of its additive manufacturing and having a void content as close as possible to 0, a problem of decompression invalidity due to gas entry hardly occurs.

Under such additive manufacturing conditions, a TiAl-based alloy is liable to break owing to a thermal stress after its additive manufacturing depending on its shape. Accordingly, it is realistic to perform additive manufacturing under such a condition that some degree of void content is imparted to the mixed raw material powder, to thereby provide a temporary sintered body (the term "void content" as used herein refers to a value defined by the expression "$\rho_1-\rho_X/\rho_1$" where $\rho_1$ represents a true density obtained in a main-sintered body, and $\rho_X$ represents the specific gravity of the temporary sintered body).

A $TiAl_3$ phase obtained in the temporary sintering stage is stable up to relatively high temperature, and its crystal gradually transforms into a TiAl phase or a $Ti_3Al$ phase serving as the final equilibrium phase by virtue of the diffusion action of the subsequent HIP treatment. During the process, the $TiAl_3$ phase has high shape retentivity, and hence even when the temporary sintered body has some voids, the temporary sintered body contracts (the voids are filled) while maintaining a similar shape.

Accordingly, when the ceramic powder is vacuum-sealed as an intermediate medium in the capsule, and the capsule is decompressed in the HIP device, the mixture in the capsule contracts while maintaining its shape. Thus, the final sintered body can be obtained. The inventors of the present invention have recognized that even in the case of a temporary sintered additively manufactured body having a void content of 25%, the final sintered body maintaining its shape is obtained. That is, the inventors have recognized that when undersizing is foreseen on the basis of the void content, and a temporary sintered body having a similar shape is produced so that its density is 75% or more of the true density of the final sintered body, the final sintered body having a net shape or a near net shape can be obtained.

The method according to claim 5 or 6 enables the prevention of the oxidation of the inside of the sintered body by oxygen present in a trace amount in the inert gas.

In addition, the powder additive manufacturing device sinters each layer through beam irradiation. A laser beam or an electron beam may be used as a beam to be used.

A TiAl-based alloy according to claim 7 is a TiAl-based alloy, which is obtained by the method of any one of claims 1 to 6, wherein when a chemical symbol in a mathematical formula directly represents an atomic percent of the element in the alloy, the following relationships are satisfied: $41.0 \le Al \le 48.0$; and $18 \le 100-(Al+Ti)$, and wherein the TiAl-based alloy further includes, as added elements, respective elements so that the following relationships are satisfied: $V+Nb+Ta \le 12$; $Cr+Mn \le 4.0$; $W+Mo \le 1.5$; and $1.0 \le V+Nb+Ta+Cr+Mn+W+Mo$.

A TiAl-based alloy according to claim 8 is the TiAl-based alloy according to claim 7, wherein oxygen serving as an inevitable impurity satisfies a relationship of $O \le 0.5$. Also in a TiAl-based alloy according to claim 9, the relationship of $O \le 0.5$ is preferably satisfied.

The TiAl-based alloy according to claim 9 is the TiAl-based alloy according to claim 8, wherein the TiAl-based alloy further includes, as added elements, respective elements so that the following relationships are satisfied: $La \le 0.15$; $B \le 1.0$; $C+N \le 2.0$; and $0.01 \le La+B+C+N$.

Claim 7 is represented as follows without using any mathematical formula:

a TiAl-based alloy, which is obtained by the method of any one of claims 1 to 6,
wherein a ratio (at%) of Al in an entirety (100 at%) is 41.0 or more and 48.0 or less,
wherein a ratio (at%) of a balance excluding Al and Ti to the entirety is 18 or less,
wherein the TiAl-based alloy may include, as a $\beta$ phase-stabilizing element, V, Nb, or Ta at a ratio (at%) of a total thereof to the entirety of up to 12,
wherein the TiAl-based alloy may include Cr or Mn at a ratio (at%) of a total thereof to the entirety of up to 4.0, and
wherein the TiAl-based alloy may include W or Mo at a ratio (at%) of a total thereof to the entirety of up to 1.5,
provided that V, Nb, Ta, Cr, Mn, W, and Mo are in such a relationship as to be added at a ratio (at%) of a total thereof to the entirety of 1.0 or more.

In addition, claim 9 is represented as follows without using any mathematical formula:
the TiAl-based alloy according to claim 8, wherein the TiAl-based alloy includes La and B at ratios (at%) of up to 0.15 and 1.0, respectively to the entirety, or includes C and N at a ratio (at%) of a total thereof to the entirety of up to 2.0, and La, B, C, and N are in such a relationship as to be added at a ratio (at%) of a total thereof to the entirety of 0.01 or more.

In the commercialization of the TiAl-based alloy, one necessary condition for imparting minimum room-temperature ductility thereto is to impart a fine microstructure through the prevention of the coarsening of a crystal grain. The inventors of the present invention have made extensive investigations, and as a result, have achieved stable deposition of a $\beta$ phase while adopting the composition described in any one of claims 7 to 9.

The classification of the added elements and the ranges of their addition amounts are described below.

(1). V, Nb, and Ta:

V, Nb, and Ta belong to the vanadium group of the periodic table, and form a group of elements that may each substitute the largest amount of Ti of a TiAl phase. The addition of such element can be expected to stabilize the $\beta$ phase and to achieve the solid-solution strengthening, and an improvement in corrosion resistance, of the TiAl phase. The total addition amount of the elements preferably falls within the range of from 0.5 at% to 12.0 at%. When the amount is less than 0.5 at%, no effect of the addition is obtained, and when the amount is more than 12.0 at%, a reduction in ductility, or an increase in specific gravity, of the TiAl-based alloy occurs.

(2). Cr and Mn:

Cr and Mn belong to groups adjacent to each other on the periodic table, and each provide, as effects of its addition to the TiAl-based alloy, a $\beta$ phase-stabilizing effect and an improvement in ductility of the alloy. The upper limit of the total addition amount of the elements is set to 4.0 at% because concern is raised about, for example, the destabilization of the lamellar structure of the alloy or the formation of a deposit different from an assumed deposit.

(3). Mo and W:

Mo and W belong to the same group of the periodic table, and are each a strong $\beta$ phase-stabilizing element. In addition, the solid-solution strengthening, and an improvement in high-temperature strength, of the TiAl phase can be expected from such element. The upper limit of the total addition amount of the elements is set to 1.5 at% because a deposit different from the assumed deposit is formed and the specific gravity of the TiAl-based alloy increases.

(4).
The minimum addition amount is preferably set for the entirety of the element groups described in the sections (1) to (3) because the groups each have the following effect: crystal grain growth is suppressed by stabilizing the $\beta$ phase in a high-temperature region. When the amount is set to 1.0 at%, that is, the relationship of $1.0 \le V+Nb+Ta+Cr+Mn+W+Mo$ is satisfied, a crystal grain-refining effect is provided. When the production efficiency of the TiAl-based alloy is taken into consideration, an element contributing to the stabilization of a $\gamma$ phase or an $\alpha_2$ phase that is wished to be finally obtained is preferably selected. As an example, the combination of Cr, Nb, and W can shorten the time period for which high temperature is held, and hence improves the manufacturability of the alloy.

In addition to the above-mentioned elements, La, B, C, N, Fe, Co, Ni, Cu, Zr, Hf, Sn, Si, P, or the like may be added in a small amount of up to 1.0 at% for exhibiting a predetermined characteristic or improving a characteristic.

In the case of La, B, C, or N that is effective in improving a characteristic when added in a trace amount, as a condition for securing its effectiveness, it is important that the inclusion amount of oxygen O serving as an inevitable impurity be suppressed to a certain range. The amount of oxygen O to be controlled, and the addition of La and B, or of C and N are described below.

(7). O:

A reduction in amount of O serving as an inevitable impurity in the TiAl-based alloy, the impurity being derived from raw material powder or derived from a step, is important for securing the required characteristics of the final product. The adoption of the method according to the present invention can reduce the amount of O to roughly 0.5 at% even when commercial raw material powder is used (without being subjected to any special pretreatment) . The amount of O can be reduced to 0.3 at% through various kinds of adjustment.

(5). La and B:

The room-temperature ductility of a TiAl-based alloy obtained by a powder process is liable to be lower than that of a casting product dissolved in a vacuum. A cause for the foregoing is as follows: when a commercial product is used as raw material powder, oxygen O serving as an inevitable impurity tends to be liable to remain therein as compared to the above-mentioned casting product.

In view of the foregoing, the inventors of the present invention have made extensive investigations, and as a result, have reached the invention according to claim 9.

That is, the addition of 0.01 at% to 0.15 at% of La and/or 0.01 at% to 1.0 at% of B was able to provide a TiAl-based alloy having a microcrystalline structure, the alloy being reduced in dissolved oxygen amount and excellent in room-temperature tensile characteristic. As a La source, $LaB_6$ or LaN may be used as raw material powder. As a B source, $LaB_6$ or $Cr_2B$ may be used as raw material powder.

The addition of La can deposit and immobilize O as $LaAlO_3$ or $La_2O_3$. The inventors of the present invention have found that as a result of the foregoing, the amount of oxygen to be dissolved in a parent phase can be reduced, the deposition of a $\gamma$ single-phase grain can be facilitated, and the room-temperature ductility of the TiAl-based alloy can be improved so as to be comparable to that of the above-mentioned casting product.

In addition, the above-mentioned oxide is effective in improving the ductility because the oxide has a crystal grain boundary-pinning effect, and hence keeps the crystal grains of the TiAl-based alloy fine.

The addition of B mainly deposits TiB or $TiB_2$. The boride also pins the crystal grain boundary of the TiAl-based alloy to provide a ductility-improving effect. In addition, a boride phase has a relatively high affinity for oxygen, and hence can act as a trap site. Accordingly, the phase has a dissolved oxygen amount-reducing effect.

However, when any one of the foregoing elements is excessively added, such an adverse effect as described below occurs: a deposit coarsens, and hence serves as a starting point for fatigue failure. In addition, redundant La rather reduces the mechanical properties of the TiAl-based alloy.

Accordingly, it is preferred that La be added at up to 0.15 at%, and B be added at up to 1.0 at%. However, to obtain an effective effect, La and B are added as follows: the lower limit of their total amount is set to 0.01 at%.

When emphasis is placed on the creep strength of the TiAl-based alloy, only B may of course be added so that a shortening effect on the rupture life of La is not caused.

(6). C and N:

In relation to the creep strength, the TiAl-based alloy is potentially required to have a durable temperature of 800°C or more.

That is, when one or both of C and N is added so that the range of $0.01 \leq C+N \leq 2.0$ is satisfied, fine $Ti_2AlC$ or $Ti_2AlN$, or a composite phase thereof can be deposited on each of a grain boundary and a lamellar layer boundary to significantly improve the high-temperature creep strength of the alloy.

Such an addition amount that the room-temperature ductility of the alloy is not significantly impaired satisfies the relationship of $0.01 \leq C+N \leq 0.3$.

The effects of La, B, C, and N described in the sections (5) and (6) are of course effective even when each of the elements is added alone. That is, the relational formula of $0.01 \leq La+B+C+N$ specifies the minimum addition amount of the four elements.

In a solution process, it is difficult to control the addition amount of each of the elements La, B, C, and N to such a minute amount as described above. In contrast, the production method of the present invention is suitable because the method enables pre-blending in which each of the elements is homogeneously dispersed in the form of raw material powder, and the method advances the diffusion of the element at the time of its sintering.

Advantageous Effects of Invention

According to the present invention, a TiAl-based alloy having practical quality, that is, a TiAl-based alloy, which is high in room-temperature ductility and high-temperature strength as a result of the refinement of its structure by the suppression of segregation, can be produced at low cost without use of any prealloy powder as a raw material.

In addition, a TiAl-based alloy product having a net shape or a near net shape can be produced through use of additive manufacturing.

Brief Description of Drawings

FIG. 1 is a photograph of a slice test piece of the sintered body of a TiAl-based alloy obtained by an elemental powder sintering process.

FIG. 2 is a halved sectional perspective view of a columnar test piece for illustrating measurement points.

FIG. 3 is a set of a SEM photograph of each sample at each of the measurement points illustrated in FIG. 2 and an Al concentration at the measurement point.

FIG. 4 is a table showing the results of a tensile test performed while the particle diameter of raw material powder is changed.

FIG. 5 is a photograph of a porosity observed in a ruptured surface.

FIG. 6 is a table showing an alloy production example in which two-stage sintering using an additive manufacturing device and a HIP device is performed.

FIG. 7 is a set of photographs each showing the appearance of a TiAl-based alloy serving as the final sintered body.

FIG. 8 is a table showing the results of the tensile test of a sample obtained by changing the cooling rate of a TiAl-based alloy of a Ti-Al-Cr-Nb-W-La-B-C system after its sintering.

FIG. 9 is a set of backscattered electron images of the SPS sintered bodies of Ti-45 at% Al-4 at% Nb and Ti-45 at% Al-4 at% Cr according to the present invention obtained by controlling a rate of temperature increase.

FIGS. 10 are each a photograph obtained by observing the structure of an alloy having added thereto $LaB_6$.

FIG. 11 is a table showing the results of spectral analysis at Sp. 11 and Sp. 12 of FIG. 10(c).

FIG. 12 is a set of the stress-strain curve and ruptured surface photograph of the alloy having added thereto $LaB_6$.

FIG. 13 is a table showing the results of the measurement of changes in room-temperature ductility and creep rupture life of the alloy having added thereto $LaB_6$.

FIG. 14 is a graph showing the results of a creep test performed by adding C or N.

FIG. 15 is a table showing the list of TiAl-based alloys of the present invention each obtained by changing an added element.

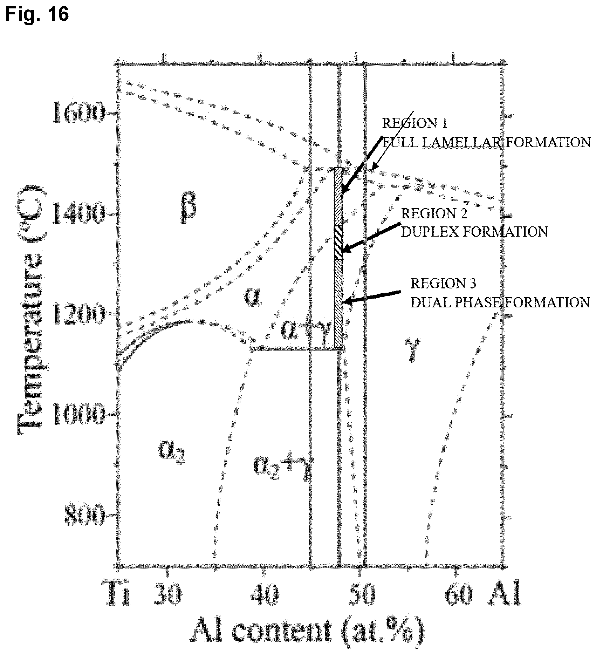

FIG. 16 is a state diagram of Ti-Al showing the range of the tolerance of macrosegregation in the TiAl-based alloy plus and minus 3 at%.

Description of Embodiments

An embodiment of the present invention is described in detail below with reference to the drawings. In the following, the terms "Example" and "Example 1 or the like," or the terms "Comparative Example" and "Comparative Example 1 or the like" overlap each other. However, the respective sections are independent of each other, and hence do not represent the same sample.

<Recognition of Macrosegregation>

First, an experiment for the recognition of macrosegregation in a TiAl-based alloy was performed.

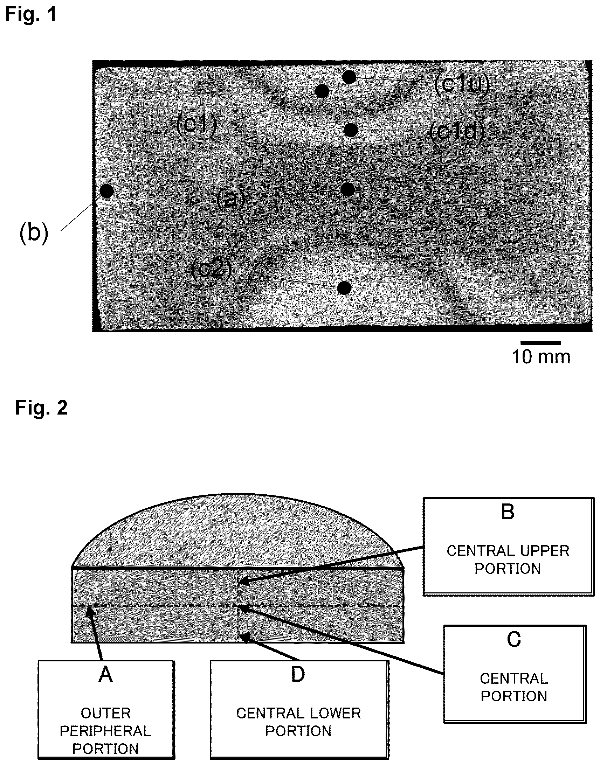

FIG. 1 is a photograph of a slice test piece of the sintered body of the TiAl-based alloy obtained by a powder process. The alloy was a Ti-Al-Nb-Cr-W-N-based alloy, and a spark plasma sintering method (SPS) was used in the sintering. The test piece is obtained by vertically cutting and slicing a cylindrical body measuring 120 mm in diameter by 60 mm in height at the center of its circle.

A dark portion (a) in the figure represents a structure in which a lamellar structure in which a $\gamma$-TiAl phase and an $\alpha_2$-Ti$_3$Al phase are arranged in a layer manner, and a $\beta$/B2-Ti phase are mainly mixed, and the structure is normal.

A pale color portion (b) in the outer periphery of the figure represents a portion in which the amount of a $\beta$ phase increases. EDX analysis with a SEM recognized that Al rarefied and the other elements were concentrated at substantially the same ratio. This is probably because of the following reason: Al in the outer periphery reached its melting point to liquefy, to thereby converge in an inside central direction through capillary, and hence Al in the outer peripheral portion relatively rarefied.

Although the upper surface portion (c1) and lower surface portion (c2) of the inside central portion of the figure are each a portion that lastly melts, heat of reaction from any other portion is applied to cause the melting in one stroke, and hence a large melt pool occurs.

In particular, a bottom portion (c1d) having a pool-like pattern on the upper surface side is in a state in which a heavy element precipitates to be concentrated, and hence the amount of the $\beta$ phase excessively increases. Meanwhile, the uppermost surface portion (c1u) of the pool is in a state in which light Al is concentrated, and hence no $\beta$ phase is present. When such a large pool as shown in the figure occurs, a difference in Al concentration between sites is remarkable. The Al concentration of the c1u is higher than an average by as much as 5 at%, and hence a target material (homogeneous alloy having designed composition) is not obtained. A state in which such a macroscopically observed Al concentration difference is present is the macrosegregation.

<Suppression of Macrosegregation>

In view of the foregoing example, a basic experiment for suppressing macrosegregation along with the melting of Al was performed.

An alloy having the composition "55 at% Ti-45 at% Al" was targeted, and mixed raw material powder containing pure Ti powder and pure Al powder at the atomic percent ratio was prepared, followed by SPS molding with a carbon die measuring 30 mm in diameter by 7 mm in thickness. Conditions for the molding are as described below.

·Rate of temperature increase: 10°C/min
·Pressurization: 10 MPa at up to 700°C, 30 MPa at 700°C and more, 50 MPa at 1,300°C and more

Sample No. 1: room temperature→1,300°C×1 h→room temperature (natural cooling)
Sample No. 2: room temperature→600°C×1 h→ 1,300°C×1 h→room temperature (natural cooling)
Sample No. 3: room temperature→800°C×1 h→ 1300°C×1 h→room temperature (natural cooling)

The microstructure of each of the samples was observed.

FIG. 2 is a halved sectional perspective view of a columnar test piece for illustrating measurement points. The measurement points are a central position A in a thickness direction near the outer periphery of the test piece, an upper surface side B at the center of the cylinder, a central position C at the center of the cylinder, and a lower surface side D at the center of the cylinder.

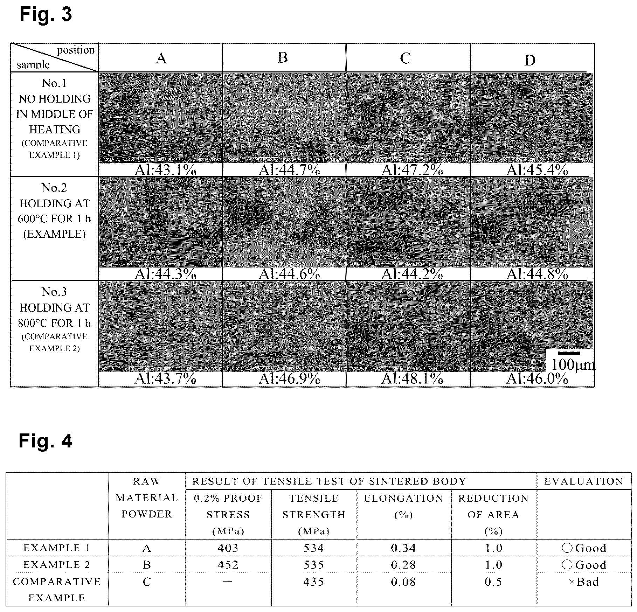

FIG. 3 is a set of SEM photographs of the above-mentioned four points of each sample. A local Al concentration measured by EDX is added (herein, there was used an analysis value in a section measuring 1 mm by 1 mm, which was a field of view 100 times as large as a region photographed with a SEM).

As is apparent from the photographs, Sample No. 2 shows the same appearance at any site. Meanwhile, Sample No. 1 or No. 3 is a crystal whose appearance clearly varies from site to site.

With regard to the Al concentrations of the samples, only in Sample No. 2, only a difference of 0.7% or less is present between its concentrations. In contrast, in each of Sample No. 1 and Sample No. 3, a concentration difference close to 5% is observed.

That is, it was recognized that only in the case (Example) of the SPS sintering corresponding to Sample No. 2 in which the step of holding a temperature at 600°C was arranged, an alloy free of any variation was obtained.

Meanwhile, it was recognized that in each of the case (Sample No. 1, Comparative Example 1) in which no temperature holding step was arranged during heating and the case (Sample No. 3, Comparative Example 2) in which a temperature holding step was arranged, but the temperature was held at as high as 800°C, large variation in Al concentration occurred, and there existed a site at which the concentration deviated from the range of a target value of 45 at%±3 at%.

From the viewpoints of the mechanical properties and other required specifications of a TiAl-based alloy, a shift from the target value in terms of Al needs to be set within ±3 at%, desirably within the range of the target value±2 at% even in a section measuring 1 mm by 1 mm at any site inside a sample.

The deviation of Sample No. 2 from the target value sufficiently satisfies the required specification, and is within ±1 at%. Accordingly, although an alloy having practicality has not heretofore been obtained without use of any prealloy, surprisingly, the inventors of the present application have found that a practical TiAl alloy can be produced even from mixed raw material powder.

In view of the fact that the melting point of Al is about 660°C, and the fact that the temperature at which Sample No. 2 is held and the temperature at which Sample No. 3 is held are 600°C and 800°C, respectively, and a difference in Al concentration occurs therebetween, the inventors of the present application have conceived that in such heating that the melting of Al advances little by little, that is, at a certain rate or less, or such heating that a temperature holding time is arranged, although solute element powder such as Ti is immersed in a low-viscosity Al molten liquid, the network of a Ti-Al compound produced every moment on the surface of the powder is formed and maintained. Temperature control near the dissolution temperature of Al, for example, keeps the viscosity to make it difficult for a melt pool to occur, and hence no macroscopic convection is caused. Probably as a result of the foregoing, the macrosegregation is suppressed. Specifically, the inventors have conceived a method in which a phase change near the melting point of Al is made moderate by reducing the rate at which the temperature of Al is increased or by arranging a constant-temperature step. Thus, the inventors have arrived at the present invention.

As the melting advances toward the inside of Al, an overheating phenomenon is caused by the formation reaction of the Ti-Al compound. Thus, the melting may advance in one stroke to cause the convection of a melt pool. The following may be effective: the temperature of the compound heated once to the vicinity of the melting point of Al is not only held but also reduced; or the heating and cooling thereof are repeated in a certain temperature range.

In addition, in temperature management in an actual production process, a temperature is measured from the outside with a noncontact temperature gauge or the like. Accordingly, temperature control needs to be performed on the assumption that there is a difference of about several tens of degrees between the measured temperature and the true temperature of the inside.

In view of the foregoing, at the time of the heating of the mixed raw material powder, in a predetermined temperature region between 550°C and 750°C, the temperature was increased at a rate of temperature increase of 10°C/min or less, or an isothermal holding time was arranged while the temperature was increased (or decreased in some cases) in a stepwise manner.

When the volume of a TiAl-based alloy to be produced is large, it is preferred that the rate of temperature increase be set small and the isothermal holding time be set long, though the rate and the time depend on the volume.

The predetermined temperature region and the rate of temperature increase of 10°C/min or less may be determined by performing a pretest on the basis of the composition of the alloy to be produced. Even when the predetermined temperature region is maximized to the range of from 550°C to 750°C, the transit time of the temperature region is 20 minutes as long as the rate of temperature increase is maximized to 10°C/min.

The above-mentioned method, that is, the arrangement of a buffer zone for a temperature increase can substantially eliminate macroscopic Al segregation, which is at such a level as to impair mechanical strength, to provide a homogeneous TiAl-based alloy. At this time, the alloy can be synthesized from metal powder without use of any prealloy (low-cost alloy production can be achieved).

As a metal serving as raw material powder becomes finer, its specific surface area becomes larger to cause the inclusion of oxygen due to its surface oxidation (in the TiAl-based alloy, oxygen is an impurity, and reduces its mechanical properties).

In view of the foregoing, Ti and Al serving as the main bodies of the raw material powder are each preferably turned into spheroidized powder by an atomization production method in which the inclusion of oxygen is prevented. In addition, the grain sizes of the powder are desirably uniformized in a certain range.

<Reduction of Porosity>

The adoption of SPS or HIP can reduce the frequency at which a porosity occurs through its pressurizing force. In actuality, even in a TiAl alloy or a TiAl-based alloy having added thereto any other element, the sectional area ratio of its porosity can be set to 0.1% or less by pressure sintering.

The abundance ratio of the porosity depends on a pressure and temperature. A pressure guideline is 10 MPa or more, and a temperature guideline is 1,000°C or more.

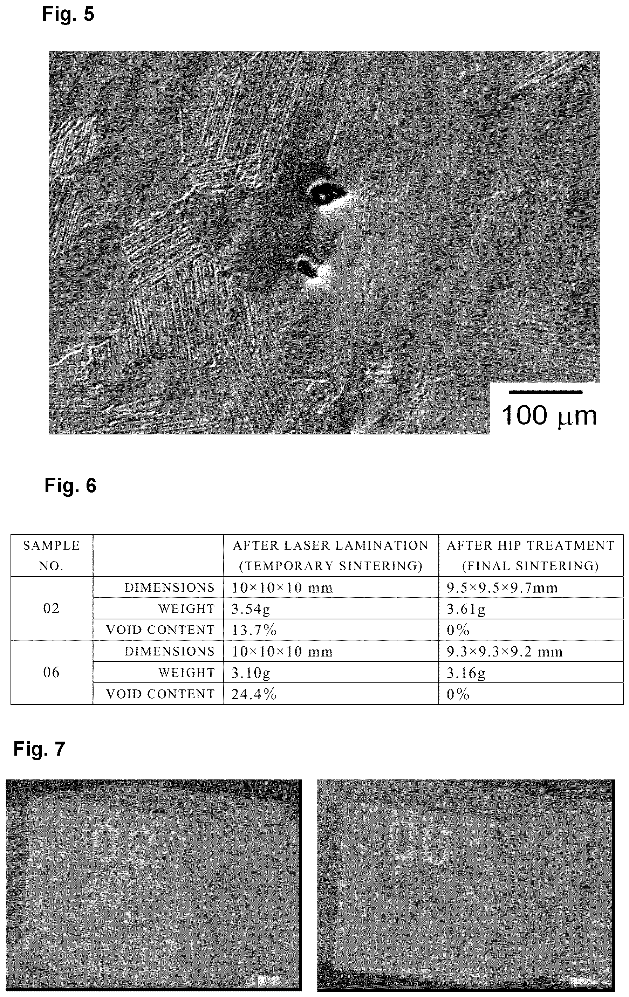

An observation example of a porosity in the sample ruptured surface of a Ti-45Al alloy obtained by the SPS (sintering pressure: 10 MPa) is shown in FIG. 5. Although each of the SPS and the HIP can achieve a porosity level (a sectional area ratio of 0.1% or less) at which practical strength can be secured, when required specifications are high, a pressure is increased to reduce the porosity. That is, the pressure is set to 10 MPa or more, and only needs to be set to 50 MPa or more, or 100 MPa or more in accordance with the specifications (in addition, a sintering temperature is appropriately set in accordance with the pressure).

<Suppression of Microsegregation>

In addition, a relationship between the grain sizes of Ti and Al was investigated.

Ti-Al-Nb-Cr-W-based alloys, which were different only in particle diameter of raw material powder from each other, and were identical in composition, sintering conditions, and heat treatment conditions to each other, were produced, and were each subjected to a tensile test. The results are shown in FIG. 4.

Example 1 (raw material powder A) shows results obtained by using Al powder whose maximum particle diameter and average particle diameter are each about 2/3 of that of Ti powder. Example 2 (raw material powder B) shows results obtained by using Al powder whose maximum particle diameter and average particle diameter are each 1/2 or less of that of the Ti powder. Comparative Example 1 (raw material powder C) shows results obtained by using Al powder whose maximum particle diameter and average particle diameter are each larger than that of the Ti powder.

As shown in the figure, it was able to be recognized that to reduce the particle diameter of Al to a value smaller than that of Ti led to a reduction in microsegregation, and was hence necessary for stabilizing the mechanical properties of a product.

<Cooling Rate Management>

Next, a cooling rate after sintering was investigated. Cooling is applicable to each of a sintered body obtained by temperature increase management and a sintered body obtained by combining a powder additive manufacturing device and a HIP device.

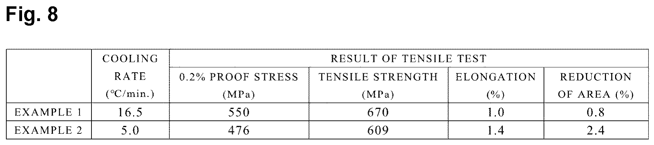

FIG. 8 shows the results of a tensile test in which the cooling rate of a TiAl-based alloy of a Ti-Al-Cr-Nb-W-La-B-C system after its sintering is changed. The cooling rate is an average during a period for which the temperature of the alloy is reduced from its sintering temperature to 900°C.

Example 1 corresponds to rapid cooling, and its 0.2% proof stress and tensile strength are relatively high. Accordingly, the results are satisfactory. Meanwhile, in Example 2, the cooling rate is smaller than that in Example 1, and its 0.2% proof stress and tensile strength significantly reduce as compared to those of Example 1. The following change was separately recognized in a microstructure: an increase in lamellar layer interval.

As described above, it was found that a small cooling rate significantly reduced the mechanical characteristics of the TiAl-based alloy in some cases. Accordingly, active cooling needs to be appropriately performed. The cooling is controlled so that its rate is 3°C/min or more, preferably 5°C/min or more, or in some cases, 15°C/min, though the rate depends on the composition of the alloy, and the volume and shape of the sintered body.

<Method of producing Alloy by combining Additive Manufacturing Device and HIP Device>

A TiAl-based alloy can be produced by combining an additive manufacturing device and a HIP device.

First, mixed raw material powder containing Ti powder and Al powder as main raw materials is sintered with a powder additive manufacturing device in a non-oxidizing atmosphere to provide a temporary sintered body. The foregoing is a temporary sintering step of forming a TiAl$_3$ phase serving as a metastable phase.

At this time, a temporary sintered alloy body having a shape similar to a net shape is obtained by performing a solidification reaction in each layer so that the density of the temporary sintered body is 75% or more of the measured true density of a test body obtained by separately performing a process up to main sintering in advance through use of powder having the same composition. The foregoing can be achieved by performing beam scanning so that any site of each layer is heated at 660°C or more for 0.1 second or more.

Next, the resultant temporary sintered body is cooled once, and is heated to 1,000°C or more with the HIP device at a gas pressure of 10 MPa or more. The pressure sintering step achieves thermal diffusion to form a microscopic stable phase. Thus, the final sintered body can be obtained.

At the time of the pressure sintering, first, ceramic powder is loaded into a capsule, and the temporary sintered body is embedded in the powder, followed by the sealing of the capsule in a vacuum. After that, the entirety of the capsule is subjected to HIP treatment in an inert gas. Thus, oxidation derived from a compressed gas is prevented, and hence at a contraction rate in accordance with the voids of the temporary sintered body, a molded body having a net shape or a near net shape, the molded body being substantially free of any void, can be obtained while the shape thereof is maintained.

The production examples of alloys each formed of a 10-millimeter square material impressed with a sample number in each of which a powder process including using the additive manufacturing device, that is, the above-mentioned two-stage sintering is performed are shown in FIG. 6. In addition, appearance photographs of the final sintered bodies (TiAl-based alloys) subjected to the HIP treatment are shown in FIG. 7. Each of the alloys was impressed with the sample number after its temporary sintering.

As is apparent from FIG. 6 and FIG. 7, it is found that even when the void content of a temporary sintered body is about 25%, the temporary sintered body uniformly contracts, and hence a TiAl-based alloy having a net shape or a near net shape, the alloy having a void content of 0, can be produced.

<Investigation on Improvement in Characteristic: Addition of Nb or Cr>

To express higher mechanical properties, the microstructure of a sintered body only needs to be made homogeneous and fine. In view of the foregoing, a $\beta$ phase in an alloy was utilized. The $\beta$ phase exhibits a facilitating effect on plastic deformation and a preventing effect on the coarsening of a crystal structure in a high-temperature region of more than 1,000°C.

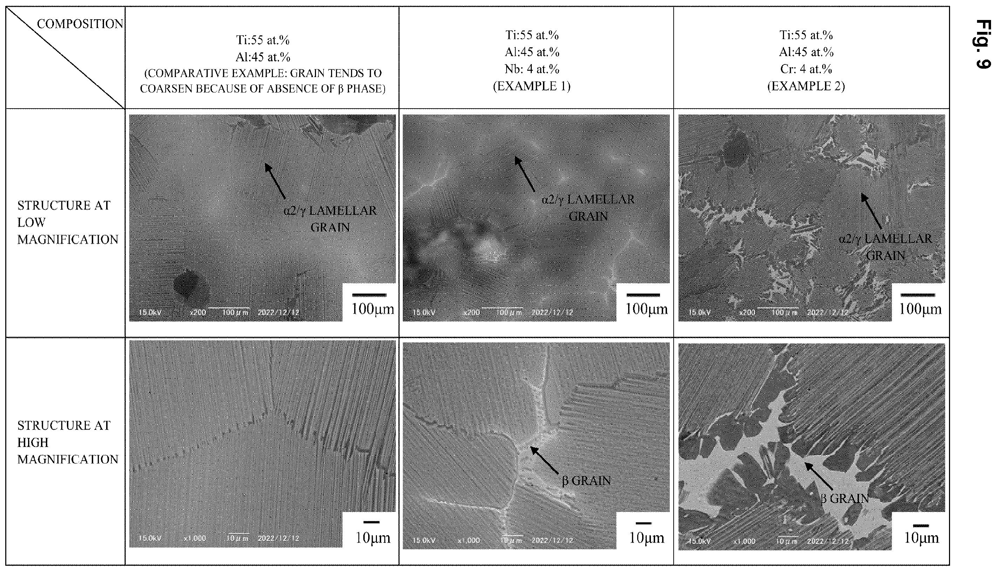

Mixed raw material powder having added thereto Nb or Cr as a $\beta$ phase-stabilizing element was subjected to pressure sintering. FIG. 9 is a set of backscattered electron images of the SPS sintered bodies of Ti-45Al-4Nb and Ti-45Al-4Cr according to the present invention obtained by controlling a rate of temperature increase (a temperature increase condition is the same as that of Sample No. 2 described above). In the figure, a white portion is a $\beta$ phase in which Nb is concentrated. Ti-45Al is also shown as Comparative Example (in Comparative Example, the tendency of a grain to coarsen is observed).

The addition amount of each of Nb, which is added at 4 at% to a TiAl-based alloy, and Cr, which is added at 4 at% thereto, is not sufficient on a state diagram, and the amount does not lead to stable dispersion of the $\beta$ phase. However, probably because of a slow diffusion rate, the $\beta$ phase is present in the form of being omnipresent on the grain boundary of an $\alpha$ phase or a $\gamma$ phase, and as a result, suppresses the coarsening of a crystal grain.

The average of the particle diameters of the raw material powder of each of Ti, Al, Nb, Cr, and various added elements to be used is preferably set to 1 $\mu$m or more and less than 100 $\mu$m because each of the elements exhibits a coarsening-suppressing effect even when its addition amount is small.

In addition, V and Ta may be added instead of Nb or together with Nb at a total amount of up to 12 at%.

Similarly, Mn may be added instead of Cr or together with Cr at a total amount of up to 4.0 at%.

W and Mo may be added at a total amount of up to 1.5 at%.

<Investigation on Improvement in Characteristic: Control of O Content and Addition of La or B>

Whether or not a dissolved oxygen amount was able to be reduced by depositing incorporated oxygen as an oxide was investigated. Specifically, the tensile ductility of an alloy at room temperature when $LaB_6$ was added thereto was examined.

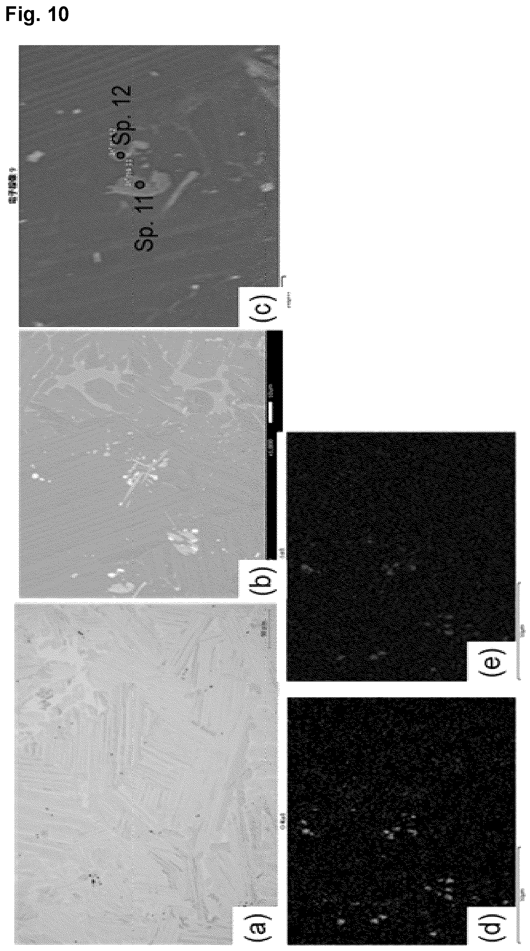

The structure of the alloy having added thereto $LaB_6$ is shown in each of FIGS. 10. In the figures, FIG. 10(a) is an optical microscope image, FIG. 10(b) is a secondary electron image, FIG. 10(c) is a backscattered electron image, FIG. 10(d) is a mapping image of O, and FIG. 10(e) is a mapping image of La. FIG. 10(b), FIG. 10(d), and FIG. 10(e) are the images of substantially the same site.

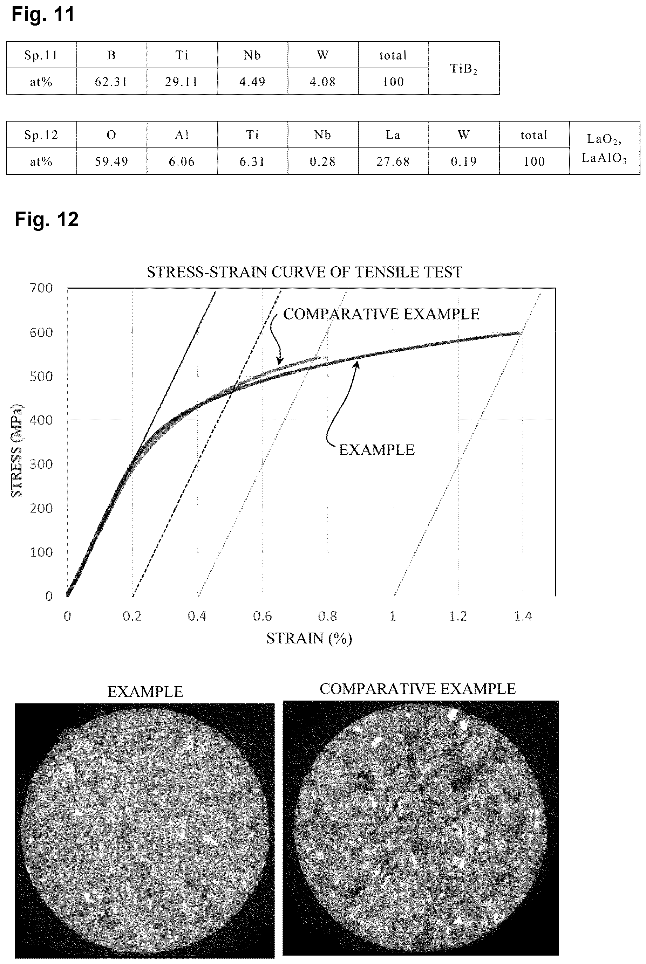

The alloy of FIG. 10(c) is a $LaB_6$-added sample containing 0.1 at% of La. In the figure, Sp. 11 and Sp. 12 are composition analysis points. The results of spectral analysis (atomic percent of an element) at the sites are shown in FIG. 11.

At the point Sp. 12, $LaAlO_3$ accounted for over a half of oxides serving as deposits, and $La_2O_3$ was partially observed.

At the point Sp. 11, a boride was in the form of $TiB_2$. In addition, the boride often coarsened to some extent in the form of, for example, a needle or a flat plate.

The addition of $LaB_6$ clearly makes the crystal grain size of the alloy finer. The deposition of the oxides and the boride described above pins the crystal grain boundary of the alloy to refine its crystal structure. Along with the foregoing, a ductility-improving effect can be expected.

In addition, La takes in oxygen, and hence oxygen whose amount is from twice to three times (at%) as large as an amount added as La is consumed. Thus, it can be said that oxygen dissolved in a TiAl phase substantially reduces, and hence the harmfulness of oxygen in the alloy reduces.

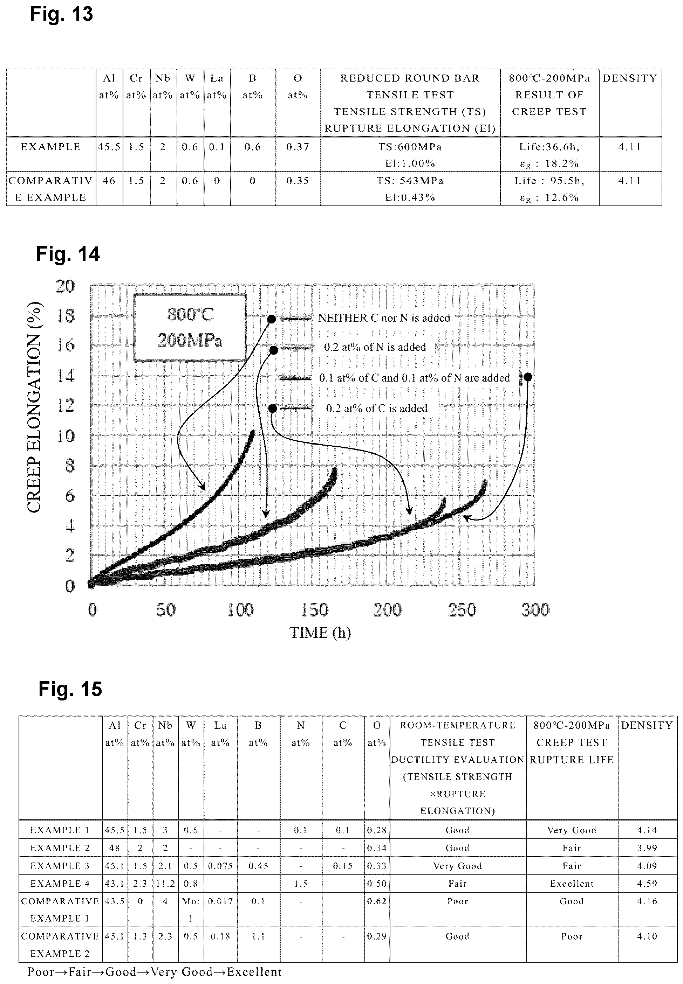

Results obtained by performing the reduced round bar tensile tests of the $LaB_6$-added sample containing 0.1 at% of La and a sample to which $LaB_6$ is not added are shown in FIG. 12. The photographs of the ruptured surfaces of Example and Comparative Example are also shown in the figure. The results of the measurement of changes in room-temperature ductility and creep rupture life of each of the samples are shown in FIG. 13.

As is apparent from FIG. 12 and FIG. 13, the addition of $LaB_6$ made the crystal grain size of the sample finer to provide a triplex structure, and hence room-temperature ductility serving as a characteristic required for the commercialization of a TiAl-based alloy was clearly improved (the addition of La increased the rupture elongation of the sample from 0.4% to 1.0%). The creep rupture life thereof shortened. This is probably because of a factor such as a crystal grain size-refining effect.

Next, an experiment for investigating the addition amount of $LaB_6$ was performed. As a result, it was recognized that when the alloy contained about 0.3 at% of O, the maximum addition amount was preferably 0.15 at% or less in terms of La. As the addition amount increases, a possibility that any other characteristic is impaired becomes higher; for example, a coarse deposit may be produced to serve as a starting point for fatigue

failure. Accordingly, $LaB_6$ is more preferably added at 0.10 at% or less in terms of La. In addition, when the oxygen amount of the alloy is smaller, the addition amount of La may be reduced along with the smaller amount.

As described above, the addition of $LaB_6$ enables the production of a TiAl-based alloy excellent in room-temperature ductility. La may be added as, for example, LaN.

<Investigation on Improvement in Characteristic: Addition of C or N>

Next, an effect exhibited by the addition of C or N was investigated.

C and N are deposited in the forms of, for example, $TiAlN_2$ and $TiAlC_2$ on, for example, a grain boundary and a lamellar layer boundary in an alloy. The deposition improves the resistance of the alloy to grain boundary sliding at high temperature, and in particular, improves the creep strength thereof.

In view of the foregoing, the following four patterns of Ti-Al-Cr-Nb-W-based alloys were produced, and were each subjected to a creep test under an environment at 800°C and 200 MPa: C=N=0, 0.2C, 0.1C-0.1N, and 0.2N. FIG. 14 shows the results of the test in the forms of creep curves.

As is apparent from the figure, it was recognized that the addition of C or N had the following effect: the creep strength of the alloy was improved, that is, the creep rate thereof was reduced, and hence the rupture life thereof was lengthened.

<Examples of the Present Invention and Oxygen Amount obtained by Product Analysis>

The list of the TiAl-based alloys of the present invention each obtained by changing an added element is shown in FIG. 15. The results of the tensile test and creep test of each of the alloys, and the density thereof are also shown in the figure. In addition, the contents of oxygen O in the alloys were measured.

When the oxygen amount of each of the alloys is 0.5 at% or less, preferably 0.3 at% or less, the following tendency is observed: the alloy has a microcrystalline structure and is excellent in room-temperature tensile characteristic.

In Example 1, high strength and high ductility are targeted by setting the amount of Nb to 3 at%, and blending Cr and W, and C or N is added to improve the creep strength of the alloy.

Example 2 is 4822 alloy composition. Although the alloy has low strength and La is not added thereto, its room-temperature tensile elongation appears with some degree of ease.

In Example 3, W, La, B, and C are added to the composition of Example 2 serving as a base. The ductility of the alloy is kept and the strength thereof is improved to some extent.

Example 4 is a high Nb- and high N-added material. The creep strength of the material is considerably high for a TiAl-based alloy. The elongation thereof at room temperature hardly appears, and the specific gravity thereof is somewhat high.

Comparative Example 1 is composition corresponding to a TNM alloy, and Mo is added thereto. Although La is added thereto, the oxygen content of the Mo raw material of the alloy is high, and hence the rupture elongation thereof is not sufficient.

In Comparative Example 2, $LaB_6$ corresponding to 0.18 at% of La is excessively added. Various characteristics of the alloy such as room-temperature ductility are not sufficiently high.

As described above, according to the present invention, a TiAl-based alloy having practical quality, that is, a TiAl-based alloy, which is high in room-temperature ductility and high-temperature strength as a result of the refinement of its structure by the suppression of segregation, can be provided without use of any prealloy powder as a raw material. Low-cost production can be achieved because in the present invention, input energy is small and a lead time can be shortened as compared to a related-art production technology.

In addition, a TiAl-based alloy product having a net shape or a near net shape can be produced through use of additive manufacturing.

Industrial Applicability

The present invention can be adopted in a member that has high temperature or is exposed to high temperature in a field where high specific strength and heat resistance are required, such as an aircraft or an automobile, and the present invention is applicable to a rocket technology such as a satellite launch.

**Claims**

1. A method of producing a TiAl-based alloy, comprising subjecting mixed raw material powder containing Ti powder and Al powder as main raw materials to vacuum sintering,
   wherein such an alloy that an abundance ratio of Al in an arbitrary section measuring 0.5 mm by 0.5 mm inside a sintered body falls within a range of an Al fraction in the mixed raw material powder plus and minus 3 at% is obtained by increasing a temperature of the mixed raw material powder at a rate of temperature increase of 10°C or less per minute, or by arranging an isothermal holding time while increasing the temperature in a stepwise manner, in a predetermined temperature region between 550°C and 750°C.

2. The method of producing a TiAl-based alloy according to claim 1, wherein the method comprises a step of subjecting the mixed raw material powder to heat sintering at 1,000°C or more and a pressure of more than 10 MPa, to thereby provide a TiAl-based alloy in which a sectional area ratio of a porosity is 0.1% or less.

3. The method of producing a TiAl-based alloy according to claim 1, wherein raw material powder in which both of a maximum value and an average of particle diameters of Al are smaller than those of Ti is used.

4. The method of producing a TiAl-based alloy according to claim 1, wherein the method comprises a step of, after increasing the temperature at a rate of temperature increase of 10°C or less per minute, or after arranging the isothermal holding time while increasing the temperature in a stepwise manner, in the predetermined temperature region between 550°C and 750°C, sintering the resultant at 1,000°C or more and a pressure of more than 10 MPa, followed by cooling of the sintered product to 900°C at a cooling rate of 3°C/min or more.

5. A method of producing a TiAl-based alloy, comprising forming mixed raw material powder containing Ti powder and Al powder as main raw materials with a powder additive manufacturing device in a non-oxidizing atmosphere,

   wherein beam scanning is performed so that any site of each layer is heated at 660°C or more for 0.1 second or more, to thereby form laminated temporary sintered bodies, and
   wherein the laminated temporary sintered bodies are subjected to main sintering at 1,000°C or more and a pressure of more than 10 MPa with a HIP device to provide a final sintered body.

6. The method of producing a TiAl-based alloy according to claim 5, wherein the main sintering is performed by: accommodating ceramic powder and the temporary sintered bodies in a metal capsule; deaerating and sealing the capsule; and then increasing a temperature of, and decompressing, an entirety of the capsule with the HIP device in an inert gas.

7. A TiAl-based alloy, which is obtained by the method of any one of claims 1 to 6,

   wherein when a chemical symbol in a mathematical formula directly represents an atomic percent of the element in the alloy, the following relationships are satisfied:

$$41.0 \leq Al \leq 48.0;$$

and

$$18 \leq 100 - (Al + Ti),$$

and
wherein the TiAl-based alloy further comprises, as added elements, respective elements so that the following relationships are satisfied:

$$V + Nb + Ta \leq 12;$$

$$Cr + Mn \leq 4.0;$$

$$W + Mo \leq 1.5;$$

and

$$1.0 \leq V + Nb + Ta + Cr + Mn + W + Mo.$$

8. The TiAl-based alloy according to claim 7, wherein oxygen serving as an inevitable impurity satisfies a relationship of $O \leq 0.5$.

9. The TiAl-based alloy according to claim 8, wherein the TiAl-based alloy further comprises, as added elements, respective elements so that the following relationships are satisfied:

$$La \leq 0.15;$$

$$B \leq 1.0;$$

$$C + N \leq 2.0;$$

and

$$0.01 \leq La + B + C + N.$$

**Fig. 1**

10 mm

**Fig. 2**

B
CENTRAL UPPER PORTION

C
CENTRAL PORTION

A
OUTER PERIPHERAL PORTION

D
CENTRAL LOWER PORTION

## Fig. 3

| position / sample | A | B | C | D |
|---|---|---|---|---|
| No.1<br>NO HOLDING IN MIDDLE OF HEATING<br>(COMPARATIVE EXAMPLE 1) | Al:43.1% | Al:44.7% | Al:47.2% | Al:45.4% |
| No.2<br>HOLDING AT 600°C FOR 1 h<br>(EXAMPLE) | Al:44.3% | Al:44.6% | Al:44.2% | Al:44.8% |
| No.3<br>HOLDING AT 800°C FOR 1 h<br>(COMPARATIVE EXAMPLE 2) | Al:43.7% | Al:46.9% | Al:48.1% | Al:46.0% |

100μm

## Fig. 4

| | RAW MATERIAL POWDER | RESULT OF TENSILE TEST OF SINTERED BODY | | | | EVALUATION |
|---|---|---|---|---|---|---|
| | | 0.2% PROOF STRESS (MPa) | TENSILE STRENGTH (MPa) | ELONGATION (%) | REDUCTION OF AREA (%) | |
| EXAMPLE 1 | A | 403 | 534 | 0.34 | 1.0 | ○ Good |
| EXAMPLE 2 | B | 452 | 535 | 0.28 | 1.0 | ○ Good |
| COMPARATIVE EXAMPLE | C | — | 435 | 0.08 | 0.5 | ×Bad |

Fig. 5

100 μm

Fig. 6

| SAMPLE NO. | | AFTER LASER LAMINATION (TEMPORARY SINTERING) | AFTER HIP TREATMENT (FINAL SINTERING) |
|---|---|---|---|
| 02 | DIMENSIONS | 10×10×10 mm | 9.5×9.5×9.7mm |
| | WEIGHT | 3.54g | 3.61g |
| | VOID CONTENT | 13.7% | 0% |
| 06 | DIMENSIONS | 10×10×10 mm | 9.3×9.3×9.2 mm |
| | WEIGHT | 3.10g | 3.16g |
| | VOID CONTENT | 24.4% | 0% |

Fig. 7

Fig. 8

| | COOLING RATE (°C/min.) | RESULT OF TENSILE TEST | | | |
|---|---|---|---|---|---|
| | | 0.2% PROOF STRESS (MPa) | TENSILE STRENGTH (MPa) | ELONGATION (%) | REDUCTION OF AREA (%) |
| EXAMPLE 1 | 16.5 | 550 | 670 | 1.0 | 0.8 |
| EXAMPLE 2 | 5.0 | 476 | 609 | 1.4 | 2.4 |

**Fig. 9**

| COMPOSITION | Ti:55 at.%<br>Al:45 at.%<br>(COMPARATIVE EXAMPLE: GRAIN TENDS TO COARSEN BECAUSE OF ABSENCE OF β PHASE) | Ti:55 at.%<br>Al:45 at.%<br>Nb: 4 at.%<br>(EXAMPLE 1) | Ti:55 at.%<br>Al:45 at.%<br>Cr: 4 at.%<br>(EXAMPLE 2) |
|---|---|---|---|
| STRUCTURE AT LOW MAGNIFICATION | | | |
| STRUCTURE AT HIGH MAGNIFICATION | | | |

EP 4 722 399 A1

Fig. 10

20

## Fig. 11

| Sp.11 | B | Ti | Nb | W | total | TiB$_2$ |
|---|---|---|---|---|---|---|
| at% | 62.31 | 29.11 | 4.49 | 4.08 | 100 | |

| Sp.12 | O | Al | Ti | Nb | La | W | total | LaO$_2$, LaAlO$_3$ |
|---|---|---|---|---|---|---|---|---|
| at% | 59.49 | 6.06 | 6.31 | 0.28 | 27.68 | 0.19 | 100 | |

## Fig. 12

STRESS-STRAIN CURVE OF TENSILE TEST

EXAMPLE

COMPARATIVE EXAMPLE

## Fig. 13

|  | Al at% | Cr at% | Nb at% | W at% | La at% | B at% | O at% | REDUCED ROUND BAR TENSILE TEST TENSILE STRENGTH (TS) RUPTURE ELONGATION (El) | 800°C-200MPa RESULT OF CREEP TEST | DENSITY |
|---|---|---|---|---|---|---|---|---|---|---|
| EXAMPLE | 45.5 | 1.5 | 2 | 0.6 | 0.1 | 0.6 | 0.37 | TS:600MPa El:1.00% | Life:36.6h, $\varepsilon_R$ : 18.2% | 4.11 |
| COMPARATIVE EXAMPLE | 46 | 1.5 | 2 | 0.6 | 0 | 0 | 0.35 | TS: 543MPa El:0.43% | Life : 95.5h, $\varepsilon_R$ : 12.6% | 4.11 |

## Fig. 14

## Fig. 15

|  | Al at% | Cr at% | Nb at% | W at% | La at% | B at% | N at% | C at% | O at% | ROOM-TEMPERATURE TENSILE TEST DUCTILITY EVALUATION (TENSILE STRENGTH ×RUPTURE ELONGATION) | 800°C-200MPa CREEP TEST RUPTURE LIFE | DENSITY |
|---|---|---|---|---|---|---|---|---|---|---|---|---|
| EXAMPLE 1 | 45.5 | 1.5 | 3 | 0.6 | - | - | 0.1 | 0.1 | 0.28 | Good | Very Good | 4.14 |
| EXAMPLE 2 | 48 | 2 | 2 | - | - | - | - | - | 0.34 | Good | Fair | 3.99 |
| EXAMPLE 3 | 45.1 | 1.5 | 2.1 | 0.5 | 0.075 | 0.45 | - | 0.15 | 0.33 | Very Good | Fair | 4.09 |
| EXAMPLE 4 | 43.1 | 2.3 | 11.2 | 0.8 |  |  | 1.5 |  | 0.50 | Fair | Excellent | 4.59 |
| COMPARATIVE EXAMPLE 1 | 43.5 | 0 | 4 | Mo: 1 | 0.017 | 0.1 | - |  | 0.62 | Poor | Good | 4.16 |
| COMPARATIVE EXAMPLE 2 | 45.1 | 1.3 | 2.3 | 0.5 | 0.18 | 1.1 | - | - | 0.29 | Good | Poor | 4.10 |

Poor→Fair→Good→Very Good→Excellent

**Fig. 16**

## INTERNATIONAL SEARCH REPORT

| International application No. |
| --- |
| **PCT/JP2024/019589** |

### A.    CLASSIFICATION OF SUBJECT MATTER

*C22C 1/04*(2023.01)i; *B22F 1/00*(2022.01)i; *B22F 3/14*(2006.01)i; *B22F 3/24*(2006.01)i; *B22F 10/50*(2021.01)i; *C22C 1/05*(2023.01)i; *C22C 14/00*(2006.01)i; *C22C 30/00*(2006.01)i; *C22F 1/00*(2006.01)i; *C22F 1/18*(2006.01)i
FI:    C22C1/04 E; B22F1/00 N; B22F1/00 R; B22F3/14 D; B22F3/24 C; B22F3/24 K; B22F10/50; C22C1/05 C; C22C14/00 Z; C22C30/00; C22F1/00 628; C22F1/00 650A; C22F1/00 682; C22F1/00 683; C22F1/00 691A; C22F1/00 691B; C22F1/00 691C; C22F1/00 691Z; C22F1/00 694B; C22F1/18 H

According to International Patent Classification (IPC) or to both national classification and IPC

### B.    FIELDS SEARCHED

Minimum documentation searched (classification system followed by classification symbols)

C22C1/04; B22F1/00; B22F3/14; B22F3/24; B22F10/50; C22C1/05; C22C14/00; C22C30/00; C22F1/00; C22F1/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| Y | CN 111215623 A (BEIJING INSTITUTE TECH) 02 June 2020 (2020-06-02)<br>claims, paragraphs [0058]-[0118] | 1-3, 7, 8 |
| A | | 4, 9 |
| Y | CN 113462917 A (GANZHOU QIYUAN NEW MAT CO., LTD.) 01 October 2021 (2021-10-01)<br>claims, paragraphs [0012]-[0015] | 1, 2, 7, 8 |
| A | | 3, 4, 9 |
| Y | JP 2006-9062 A (NIPPON STEEL CORPORATION) 12 January 2006 (2006-01-12)<br>claims, table 1, paragraphs [0028]-[0031] | 1-3, 7, 8 |
| A | | 4. 9 |

☑ Further documents are listed in the continuation of Box C.      ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **19 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/019589** |

C.     DOCUMENTS CONSIDERED TO BE RELEVANT

| Category* | Citation of document, with indication, where appropriate, of the relevant passages | Relevant to claim No. |
| --- | --- | --- |
| Y | JP 2010-95770 A (HITACHI METALS LTD.) 30 April 2010 (2010-04-30) claims, paragraph [00838], tables 1-4 | 1-3, 7, 8 |
| A | | 4, 9 |
| A | JP 5-43958 A (SUMITOMO LIGHT METAL INDUSTRIES LTD.) 23 February 1993 (1993-02-23) claims | 1-4, 7-9 |
| A | US 2017/0216915 A1 (GRID LOGIC INCORPORATED) 03 August 2017 (2017-08-03) paragraphs [0296], [0297] | 5-9 |

Form PCT/ISA/210 (second sheet) (July 2022)

## INTERNATIONAL SEARCH REPORT

International application No.

**PCT/JP2024/019589**

| Box No. III | Observations where unity of invention is lacking (Continuation of item 3 of first sheet) |
|---|---|

This International Searching Authority found multiple inventions in this international application, as follows:

Document 1: CN 111215623 A (BEIJING INSTITUTE TECH), 2 June 2020 (2020-06-02)
claims, paragraphs [0058]-[0118]
(Family: none)
Document 2: CN 113462917 A (GANZHOU QIYUAN NEW MAT CO., LTD.), 1 October 2021 (2021-10-01)
claims, paragraphs [0012]-[0015]
(Family: none)
Document 3: JP 2006-9062 A (NIPPON STEEL CORPORATION), 12 January 2006 (2006-01-12)
claims, table 1, paragraphs [0028]-[0031]
(Family: none)
Document 4: JP 2010-95770 A (HITACHI METALS LTD.), 30 April 2010 (2010-04-30)
claims, paragraph [00838], tables 1-4
(Family: none)

(Invention 1) Claims 1-4 and 7-9
Claims 1-4 and claims 7-9 that refer back thereto have the special technical feature of being "a method for manufacturing a TiAl-based alloy by vacuum sintering a mixed starting material powder having Ti powder and Al powder as the main starting materials, wherein, in a prescribed temperature range between 550°C and 750°C, the temperature is raised at a temperature increase rate of 10°C per minute or less, or while raising the temperature in stages, isothermal maintenance periods are provided," and thus are classified as invention 1.

(Invention 2) Claims 5-9
Claim 5 shares a common technical feature with claim 1 classified as invention 1 in being "a method for manufacturing a TiAl-based alloy by sintering Ti powder and Al powder as the main starting materials." However, this technical feature does not make a contribution over the prior art in the light of matters disclosed in documents 1-4, and cannot therefore be said to be a special technical feature. Moreover, there are no other same or corresponding special technical features among these inventions.
In addition, claim 5 does not depend from claim 1. Furthermore, claim 5 is not substantially identical to or similarly closely related to any of the claims classified as invention 1.
Accordingly, claim 5 and claims 6-9 that refer back thereto cannot be classified as invention 1.
Claim 5 and claims 6-9 that refer back thereto have the special technical feature of being "a method for manufacturing a TiAl-based alloy using a powder additive layer manufacturing device, by molding a mixed starting material powder having Ti powder and Al powder as the main starting materials in a non-oxidizing atmosphere, wherein beam scanning is performed so that all locations of each layer are heated at least 0.1 seconds at 660°C or more to form a layered pre-sintered body, and using a HIP device, the same is subjected to the main sintering at 1000°C or more and a pressure higher than 10 MPa to obtain the final sintered body," and thus is classified as invention 2.

Form PCT/ISA/210 (continuation of first sheet) (July 2022)

## INTERNATIONAL SEARCH REPORT

| International application No. |
| --- |
| **PCT/JP2024/019589** |

**Box No. III          Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/019589**

| Patent document cited in search report | | | Publication date (day/month/year) | Patent family member(s) | | | Publication date (day/month/year) |
|---|---|---|---|---|---|---|---|
| CN | 111215623 | A | 02 June 2020 | (Family: none) | | | |
| CN | 113462917 | A | 01 October 2021 | (Family: none) | | | |
| JP | 2006-9062 | A | 12 January 2006 | (Family: none) | | | |
| JP | 2010-95770 | A | 30 April 2010 | (Family: none) | | | |
| JP | 5-43958 | A | 23 February 1993 | US claims EP | 5372663 495454 | A A2 | |
| US | 2017/0216915 | A1 | 03 August 2017 | WO EP CN | 2017/136768 3411179 108698160 | A1 A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019051005 A
- JP 2019211349 A
- JP 2022038867 A

**Non-patent literature cited in the description**

- **MUSI, M.** ; **CLEMENS, H. et al.** Microstructure, Plasticity, and Ductility of a TNM+ Alloy Densified by Spark Plasma Sintering. *Metals*, 2022, vol. 12 (1915), 1-22
- **BEHRENS, B. et al.** Influence of Dwell Time and Pressure on SPS Process with Titanium Aluminides. *Metals*, 2022, vol. 12 (83), 1-14
- **JEJE, S. O. et al.** Spark plasma sintering of Ti-48Al intermetallic using elemental powder. *International Journal of Advanced Manufacturing Technology*, 2019, vol. 103, 3025-3032
- **WENBIN, F. et al.** Microstructure and properties of a TiAl alloy prepared by mechanical milling and subsequent reactive sintering. *Materials Science and Engineering: A*, 2005, vol. 403 (1-2), 186-190
- Near-Net Shaping of Titanium-Aluminum Jet Engine Turbine Blades by SPS. **VOISIN T.** ; **MONCHOUX JP.** ; **COURET A.** Spark Plasma Sintering of Materials. Springer, 2019